# EUROPÄISCHE PATENTSCHRIFT

(11) **EP 3 862 179 B1**
(45) Veröffentlichungstag und Bekanntmachung des Hinweises auf die Patenterteilung: **04.09.2024**
(21) Anmeldenummer: 21152745.2
(22) Anmeldetag: 21.01.2021
(51) Int. Cl.: B32B 1/08, B29C 48/00, B32B 5/02, B32B 7/10, B32B 25/04, B32B 25/10, F16L 11/08

(54) **MEHRSCHICHTIGER FLEXIBLER SCHLAUCH UND DESSEN VERWENDUNG**
MULTILAYER FLEXIBLE HOSE AND ITS APPLICATION
TUYAU FLEXIBLE MULTICOUCHE ET SON UTILISATION

(30) Priorität: 04.02.2020 DE 102020201323; 21.02.2020 DE 102020202241
(43) Veröffentlichungstag der Anmeldung: 11.08.2021
(73) Patentinhaber: ContiTech Techno-Chemie GmbH, 61184 Karben (DE)
(72) Erfinder: SINEMUS, Martin, 30419 Hannover (DE); THUM, Michael, 30419 Hannover (DE); WITT, Erika, 30419 Hannover (DE); LAUN, Mario, 30419 Hannover (DE)
(74) Vertreter: Continental Corporation

(56) Entgegenhaltungen:
- WO-A1-2012/133385
- WO-A1-2016/004204
- DE-A1- 102017 215 964
- JP-A- 2004 150 460
- US-A1- 2018 163 901
- US-A1- 2018 282 460

## Beschreibung

Die vorliegende Erfindung betrifft einen mehrschichtigen flexiblen Schlauch, ein Verfahren zu dessen Herstellung und dessen Verwendung als Bremsschlauch.

Unter Schlauch wird ein vorzugsweise flexibler länglicher Hohlkörper mit vorzugsweise im Wesentlichen rundem Querschnitt verstanden. Der Grad der Flexibilität ist nicht beschränkt, so dass auch im Wesentlichen unflexible, starre Hohlkörper unter den Begriff Schlauch subsumierter werden. Ein dichter Schlauch kann als Leitung zur Förderung fester, flüssiger und gasförmiger Stoffe verwendet werden, als deren Behälter dienen oder durch ein Medium im Innern erwünschte Eigenschaften erhalten. Ein Schlauch kann auch als Schutzummantelung, beispielsweise zur Isolation oder zur Wärmedämmung, Anwendung finden.

Von besonderer Bedeutung, insbesondere beim Aufbau von Kraftfahrzeugen, sind Bremsschläuche. Bremsschläuche werden in Bremsanlagen von Kraftfahrzeugen eingesetzt, um über das Bremspedal eine statische Bremsflüssigkeitssäule zu erzeugen, die den Druck verlustfrei auf die Radbremszylinder weiterleiten soll. Die Weitergabe der aufgewendeten Fußkraft erfolgt in den Bremsschläuchen bzw. Bremsleitungen reibungslos und verlustfrei. Bei der Überbrückung vom Fahrzeugboden zu den Rädern, d.h. den Bremszylindern, sind flexible Übergänge nötig, um einen Ausgleich zwischen Ein- und Ausfedern zu schaffen. Hierzu werden in der Regel flexible Bremsschläuche, die wenigstens eine Schicht auf Basis wenigstens einer Kautschukmischung und wenigstens eine Festigkeitsträgerschicht aufweisen, verbaut. Gegenüber starren Bremsleitungen sind sie dehnbar und verändern diese Eigenschaft mit wechselnden Temperaturbedingungen. Die Volumenänderung in den flexiblen Bremsschläuchen wird über den Pedalweg ausgeglichen, was einen sich ständig verändernden Druckpunkt zur Folge hat.

Der bei PKWs zur Verfügung stehende Einbauraum für Bremsschläuche wird immer kleiner und die Verlegegeometrie gleichzeitig komplexer, was im Gegensatz zur früheren Einbausituation deutlich kleinere Biegeradien zur Folge hat. Die Montage von Bremsschläuchen erfolgt auch heute noch hauptsächlich per Hand. Um eine schnelle Montage ohne erhöhten Kraftaufwand des Monteurs zu gewährleisten, sollte die Biegesteifigkeit eines Bremsschlauches so gering wie möglich sein.

Für die sich ständig ändernden Temperatur-, Volumen- und Druckwerte ist es erforderlich, dass der Schlauch über die gesamte Lebensdauer einen definierten Mindestwert für die Haftung der einzelnen Schichten besitzt. Nur dann kann eine einwandfreie und sichere Funktionsweise des Bremsschlauches gewährleistet werden. Für die Haftung der einzelnen Schichten untereinander werden in der Regel spezielle, auf die Gummiindustrie abgestimmte Haftsysteme verwendet.

Als Haftsystem wird in der Regel ein Resorcin-Formaldehyd-System eingesetzt, welches in der kautschukverarbeitenden Industrie somit den derzeitigen Stand der Technik bildet. Resorcin-Formaldehyd-Haftsysteme in Elastomermischungen werden häufig auch als RFS (Resorcin Formaldehyd Silica) bezeichnet, wässrige Polymerdispersionen als RFL (Resorcin Formaldehyd Latex).

Insbesondere die Haftung zwischen Resorcin-Formaldehyd-Systemen (RF-Systemen) und EPDM-Elastomer ist bestenfalls als mittelmäßig zu beurteilen. Zwischen EPM-Elastomer und RF-Systemen ist die Haftung sogar noch schlechter zu beurteilen.

Die Haftsystemkomponenten Resorcin und Formaldehyd sind als umwelt- und gesundheitsschädlich eingestuft. Die Verwendung beider Stoffe wird deshalb in den nächsten Jahren vermutlich stark eingeschränkt werden und/oder mit hohen Auflagen verbunden sein.

Silan-modifizierte Schläuche sind aus dem Stand der Technik bekannt. Die WO 2016/004204 A1 offenbart einen Schlauch mit einer inneren Lage, einer Verstärkungslage und zwei äußeren Lagen. Die Fasern sind mit einem Silan-modifizierten Polyolefin vermischt und der Schlauch dient der Anwendung in Automobilen. Die US 2018/282460 A1 offenbart mehrlagige Schläuche für Fahrzeuge, die eine äußere und eine innere Lage aufweisen, die ein Silan-modifiziertes Polyolefin enthalten, bei dem es sich um EPDM handeln kann. Die US 2018/163901 A1 offenbart Schläuche zum Transport von Kühlflüssigkeit in Fahrzeugen, welche eine innere und eine äußere Schicht aus einem Silan-funktionalisierten, kreuzvernetzten Elastomer aufweisen, wobei eine textile Verstärkungslage vorliegt. Die JP 2004 150460 A offenbart einen mehrlagigen Schlauch, der sich aus einer inneren Lage, einer Verstärkungslage und einer äußeren Lage zusammensetzt. Die Festigkeitsträgerlage wird mit einer Lösung oberflächenbehandelt um die Adhäsion zu verbessern, wobei die Lösung ein organofunktionelles Silan enthält. Die WO 2012/133385 A1 offenbart einen mehrlagigen Schlauch, der sich aus einer inneren Lage, einer Verstärkungslage und einer äußeren Lage zusammensetzt. Die innere Lage wird extrudiert und mit einer Lösung oberflächenbehandelt, wobei die Lösung ein organofunktionelles Silan enthält.

Die Aufgabe der vorliegenden Erfindung besteht somit darin, einen mehrschichtigen flexiblen Schlauch, insbesondere einen mehrschichtigen flexiblen Bremsschlauch, bereitzustellen, der sich durch eine verbesserte Haftung der einzelnen Schichten, insbesondere der Haftung zwischen einer einlagigen oder mehrlagigen Festigkeitsträgerschicht und einer Schicht auf Basis wenigstens eines Elastomers und einer gleichzeitig geringen Biegesteifigkeit auszeichnet, sowie die Anforderungen der gültigen Prüfnormen erfüllt.

Gelöst wird diese Aufgabe durch einen mehrschichtigen flexiblen Schlauch entsprechend Anspruch 1, wobei der mehrschichtige flexible Schlauch folgenden Schichtenaufbau aufweist:
- eine einlagige oder mehrlagige Außenschicht auf Basis wenigstens eines Elastomers und
- wenigstens eine einlagige oder mehrlagige Festigkeitsträgerschicht umfassend mindestens einen textilen Festigkeitsträger und
- eine einlagige oder mehrlagige Innenschicht auf Basis wenigstens eines Elastomers, wobei die Oberfläche des mindestens einen Festigkeitsträgers mit mindestens einem hydrolysierten vinyl- und aminofunktionalisierten Oligosilan funktionalisiert ist.

Die im Folgenden beschriebene Erfindung ist bei Gummiverbundkörpern wie z.B.

Schläuchen bestehend aus organischen,synthetischen und/oder natürlichen Fasern in Verbindung mit synthetischen und/oder natürlichen Elastomeren nicht bekannt.

Es hat sich gezeigt, dass die einlagige oder mehrlagige Festigkeitsträgerschicht durch die mit mindestens einem organofunktionellen Silan belegte Oberfläche des mindestens einen Festigkeitsträgers die Haftung zwischen den Schichten deutlich verbessert und die Biegesteifigkeit merklich reduziert. Beides trägt dazu bei, dass der Bremsschlauch während einer dynamischen Dauerbelastung weniger geschädigt wird.

In einer bevorzugten Ausführungsform kann somit auf die Verwendung von RF-Systemen teilweise oder vollständig verzichtet werden.

Im Folgenden kann das Wort "umfassend" sowohl "enthaltend" als auch "bestehend aus" bedeuten.

Die Außenschicht und die Innenschicht können hinsichtlich ihrer quantitativen und/oder qualitativen Zusammensetzung gleich oder verschieden sein. Sie können jeweils einlagig oder mehrlagig ausgebildet sein.

Zur Erzielung der höchstmöglichen Flexibilität sind beide Schichten auf der Basis wenigstens eines Elastomers und weiterer Mischungsingredienzien aufgebaut. Bei dem Elastomer kann es sich um Kautschuke und/oder um thermoplastische Elastomere handeln, die allein oder in Kombination verwendet werden können.

Als Kautschukkomponenten sind insbesondere zu nennen: Ethylen-Propylen-Mischpolymerisat (EPM), Ethylen-Propylen-Dien-Mischpolymerisat (EPDM), Nitrilkautschuk (NBR), (teil)hydrierter Nitrilkautschuk (HNBR), Fluor-Kautschuk (FPM bzw. FKM), Chloropren-Kautschuk (CR), Naturkautschuk (NR), Styrol-Butadien-Kautschuk (SBR), Isopren-Kautschuk (IR), Butylkautschuk (HR), Brombutylkautschuk (BIIR), Chlorbutylkautschuk (CUR), Butadien-Kautschuk (BR), chloriertes Polyethylen (CM), chlorsulfoniertes Polyethylen (CSM), Polyepichlorhydrin (ECO), EthylenVinylacetat-Kautschuk (EVA), Acrylat-Kautschuk (ACM), Siliconkautschuk (MVQ), fluorierter Methylsilikonkautschuk (MFQ), Perfluorkautschuk (FFPM oder FFKM) sowie Polyurethan (PU). Von besonderer Bedeutung sind EPM bzw. EPDM, da diese eine besonders gute Beständigkeit gegenüber der Bremsflüssigkeit besitzen.

Der erfindungsgemäße mehrschichtige flexible Schlauch ist daher vorzugsweise dadurch gekennzeichnet, dass die Außenschicht wenigstens einen EPM- oder EPDM-Kautschuk umfasst.

Ferner ist der erfindungsgemäße mehrschichtige flexible Schlauch vorzugsweise derartig aufgebaut, dass die Innenschicht wenigstens einen EPM- oder EPDM-Kautschuk umfasst.

Der erfindungsgemäße mehrschichtige flexible Schlauch zeichnet sich daher vorteilhaft dadurch aus, dass die Innenschicht wenigstens einen vernetzen, insbesondere einen vernetzen EPM- oder EPDM-Kautschuk, umfasst.

Der erfindungsgemäße mehrschichtige flexible Schlauch ist ferner dadurch vorteilhaft ausgebildet, dass die Außenschicht wenigstens einen vernetzen, insbesondere einen vernetzen EPM- oder EPDM-Kautschuk, umfasst.

Irreversibel vernetzte Elastomere werden im Allgemeinen durch Vulkanisation von natürlichen und synthetischen Kautschuken hergestellt. Unter Vulkanisation versteht man die Überführung von plastischen, kautschukartigen, ungesättigten oder gesättigten Polymeren in den gummielastischen Zustand, klassischerweise durch Vernetzung mit Schwefel(-Verbindungen). Dabei werden die einzelnen Polymerketten irreversibel durch kovalente Bindungen miteinander verbunden. Bei manchen Synthesekautschuken - insbesondere bei hoch oder vollständig gesättigten Kautschuken - werden schwefelfreie Vernetzer als Vulkanisationsmittel verwendet, wie z.B. Peroxide, Metalloxide (MgO, ZnO), Diamine oder Bisphenole.

EPDM kann sowohl mit Schwefel als auch mit Peroxiden vernetzt werden. Die Dauerwärmestabilität von peroxidisch vernetztem EPDM ist ca. 10°C höher als die von schwefelvernetztem. Besonders bevorzugt ist deshalb die Peroxidvernetzung, da während des Bremsvorgangs kurzzeitig hohe Temperaturen im Bereich der Bremsschläuche auftreten.

Besonders bevorzugte Peroxide sind z. B. 2,5-Dimethyl-2,5-bis-(tert.-butylperoxi)hexan (DTBPH), 1,4-Bis-(tert.-butylperoxi-isopropyl)-benzol (TBPDB), 1,1-Di-tert.-butyl-peroxi-3,3,5-trimethyl-cyclohexan (TBPTC), Dicumylperoxid (DCP) etc. in Kombination mit Coagenzien wie z. B. Ethylenglycoldimethylacrylat (EDMA), Triallylcyanurat (TAC), Trimethylolpropantrimethacrylat (TRIM), Diallylphtalat (DAP) etc.

Der erfindungsgemäße mehrschichtige flexible Schlauch ist daher vorzugsweise dadurch ausgestaltet, dass die Innenschicht wenigstens einen peroxidisch vernetzen EPM- oder EPDM-Kautschuk umfasst.

Der erfindungsgemäße mehrschichtige flexible Schlauch umfasst vorzugsweise ferner eine Außenschicht mit wenigstens einem peroxidisch vernetzten EPM- oder EPDM-Kautschuk.

Der erfindungsgemäße mehrschichtige flexible Schlauch weist eine einlagige oder mehrlagige Festigkeitsträgerschicht, umfassend mindestens einen Festigkeitsträger, auf. Der mindestens eine Festigkeitsträger ist dabei ein textiler Festigkeitsträger Als textile Materialien kommen hierzu insbesondere Geflechte, Gewebe und Gewirke in Frage.

Als Materialien für die vorzugsweise textilen Festigkeitsträger können alle der fachkundigen Person bekannten und geeigneten Materialien verwendet werden, die bevorzugt aus der Gruppe ausgewählt sind, bestehend aus: Polyamid (PA), z.B. PA6, PA6.6, PA11, PA12, PA6.10, PA6.12, und/oder Copolyamiden und/oder Polyestern (PES) und/oder Rayon und/oder Polyethylenterephthalat (PET) und/oder Polyethylennaphthalat (PEN) und/oder Polybutylenterephthalat (PBT) und/oder Polycarbonat (PC) und/oder ungesättigtem Polyesterharz (UP) und/oder Poly(1,4-cyclohexandimethylenterephthalat) (PCDT) und/oder Baumwolle und/oder Zellwolle und/oder Polyvinylalkohol (PVAL) und/oder Polyoxibenzonaphtoat und/oder Polyvinylacetal (PVA) und/oder Polyetheretherketon (PEEK) und/oder Polyethylen-2,6-naphthalat (PEN) und/oder Polyphenylen und/oder Polyphenylenoxid (PPO) und/oder Polyphenylensulfid (PPS) und/oder Polyphenylenether und/oder Polybenzoxazol (PBO) und/oder Polyoxadiazol (POD) und/oder Polyetherimid (PEI) und/oder m-Aramid und/oder p-Aramid und/oder Glas und/oder Basalt und/oder Metall und/oder Carbon und/oder Keramik und/oder Kohlenstoff und/oder Wolle und/oder Baumwolle und/oder Polypropylen und/oder Melamin und/oder modifizierte Viskose und/oder Gestein und/oder hochkristallinen Polymerfasern und/oder Fluorpolymeren, wie beispielsweise Fluorsilikon, Polytetrafluorethylen (PTFE) und Perfluorethylenpropylen (FEP), und/oder Fluor-Copolymeren, wie beispielsweise Poly(vinylidenfluorid-co-hexafluorpropylen) (VDF/HFP), Poly(vinylidenfluorid-co-hexafluorpropylen-co-tetrafluorethylen) (TFB), Poly(vinylidenfluorid-co-tetrafluorethylen-co-perfluormethylvinylether) (VDF/TFE/PMVE), Poly(tetrafluorethylen-co-propylen) (TFE/P) und Poly(vinylidenfluorid-co-chlortrifluorethylen) (VDF/CTFE).

Insbesondere bevorzugt ist Polyvinylalkohol (PVAL).

Die Materialien für die Festigkeitsträgerschicht können hierbei allein oder in Kombination verwendet werden, d.h., es sind auch sogenannte Hybridsysteme geeignet. Insbesondere für Bremsschläuche werden bevorzugt Materialien mit besonders guter dynamischer Leistungsfähigkeit allein oder in Kombination eingesetzt, die gleichzeitig eine geringe Volumenzunahme zeigen, wie beispielsweise PVAL oder Rayon oder PES oder Aramid.

Der erfindungsgemäße mehrschichtige flexible Schlauch ist ferner vorzugsweise dadurch gekennzeichnet, dass der mindestens eine Festigkeitsträger der einlagigen oder mehrlagigen Festigkeitsträgerschicht Rayon, PVAL, Aramid, Polyamid oder einer Hybridvariante der genannten Materialien umfasst.

Die Festigkeitsträgerschicht, umfassend mindestens einen Festigkeitsträger, kann einlagig oder mehrlagig gestaltet sein. Bei einer mehrlagigen Festigkeitsträgerschicht sind vorzugsweise alle Lagen aus einem der oben genannten Materialien für Festigkeitsträgerschichten.

Bei einer mehrlagigen Festigkeitsträgerschicht werden die mehreren Schichten an Festigkeitsträgern mittels einer Zwischenschicht miteinander verbunden. Die Zwischenschicht umfasst vorzugsweise mindestens ein Elastomer, das auch in der Innenschicht bzw. Außenschicht verwendet wird. Vorzugsweise umfasst die Zwischenschicht daher einen EPDM- und/oder EPM-Kautschuk.

Der erfindungsgemäße mehrschichtige flexible Schlauch ist daher vorzugsweise dadurch weitergebildet, dass die mehrlagige textile Festigkeitsträgerschicht zwei Festigkeitsträger aufweist, die jeweils Rayon, PVAL, Aramid, Polyamid oder eine Hybridvariante der genannten Materialien umfassen; und eine dazwischenliegende vernetzte Gummischicht, vorzugsweise auf Basis eines EPM oder EPDM Kautschuks, welcher bevorzugt peroxidisch ist, aber auch - sofern EPDM über genügend Doppelbindungen verfügt - schwefelvernetzt sein kann. Die Zwischenschicht kann auch zusätzliche Haftvermittler wie ZDA, ZDMA oder auch Silane enthalten. Die Zwischenschicht kann mittels einer Gummilösung, durch Extrusion oder durch eine dünne Folie etc. eingebracht werden.

Wesentlich ist es, dass die Oberfläche des mindestens einen Festigkeitsträgers mit mindestens einem hydrolysierten vinyl- und aminofunktionalisierten Oligosilan funktionalisiert ist. Das organofunktionelle Silan wirkt vorzugsweise als "molekulare Brücke" zwischen der polaren chemischen Oberfläche des Festigkeitsträgers und dem unpolaren EPDM/EPM-Kautschuk der Innen-, Zwischen- und Außenschicht.

Dazu wird das Ausgangsmaterial des mindestens einen Festigkeitsträgers mit einer Lösung des organofunktionellen Silans benetzt und anschließend bei mindestens 120° für 20-90 Sekunden getrocknet, so dass die Oberfläche des Festigkeitsträgers schließlich mit organischen Gruppen funktionalisiert ist.

Die Oberfläche des Festigkeitsträgers ist somit mit unpolaren organischen Gruppen funktionalisiert, letztlich also hydrophobiert. Die unpolaren Gruppen sorgen dabei für eine chemische Verträglichkeit zwischen dem polaren Festigkeitsträger und dem unpolaren Elastomer der Innen-, Zwischen- und Außenschicht. Die Oberfläche des Festigkeitsträgers ist mit elektronenreichen, reaktiven Vinylgruppen funktionalisiert.

Während der Vulkanisation reagieren die Vinylgruppen, vorzugsweise in Anwesenheit eines Vernetzungsmittels, besonders bevorzugt in Anwesenheit eines Peroxids, mit dem mindestens einen Elastomer, vorzugsweise dem EPM und/oder EPDM in der Innen.-Zwischen- bzw. Außenschicht.

Eine Reaktion mit einer schwefelvernetzenden Gummimischung ist ebenso möglich.

Bekannte Lösungen zur Silanisierung von Festigkeitsträgern beinhalten im einfachsten Fall die folgenden Chemikalien:
- Ein oder mehrere Vinylsilane, wie z. B. Vinyltriethoxysilan oder Vinylmethoxysilan
- Alkohol oder Alkoholgemische wie Isopropanol oder Ethanol als Lösemittel
- Wasser, bevorzugt destilliertes Wasser, zur Hydrolyse der O-R Gruppen (Methoxy, Ethoxy) des Organosilans
- Eine Säure als Katalysator für die Hydrolyse wie z. B. Essigsäure

Lösungen mit dieser oder ähnlicher Zusammensetzung sind über einen längeren Zeitraum nur bedingt lagerstabil. Häufig setzt die Hydrolyse der O-R Gruppen deutlich früher als gewünscht ein, was zu einer unkontrollierten Oligomerisierung der Organosilane führen kann.

Ein weiterer Nachteil dieses Systems ist die hohe VOC-Emission, die hauptsächlich durch die Verwendung von organischen Lösemitteln aber auch durch die Freisetzung von Alkoholen (in der Regel Ethanol und Methanol) als Spaltprodukt bei der Hydrolyse der Alkoxygruppen entsteht.

Zur Vermeidung von VOC-Emissionen werden entsprechend der Erfindung, oligomere Organosilane eingesetzt, die bereits vollständig zu Silanolen hydrolysiert sind und mit Wasser - vorzugsweise destilliertem - verdünnt werden können. Die oligomeren Organosilane besitzen neben den bereits erwähnten Vinylgruppen auch Aminogruppen.

Der erfindungsgemäße mehrschichtige flexible Schlauch ist daher dadurch gekennzeichnet, dass das mindestens eine organofunktionelle Silan auf der Oberfläche des mindestens einen textilen Festigkeitsträgers ein hydrolysiertes vinyl- und aminofunktionalisiertes Oligosilan ist.

Es ist bevorzugt, dass der bezeichnete erfindungsgemäße Schlauch eine einlagige oder mehrlagige textile Festigkeitsträgerschicht aufweist, insbesondere der mindestens eine textile Festigkeitsträger frei von Resorcin-Formaldehyd ist. Insbesondere ist der gesamte mehrschichtige flexible Schlauch vorzugsweise frei von Resorcin-Formaldehyd.

Die Menge an RF-Systemen in der ein- oder mehrlagigen Festigkeitsträgerschicht beträgt besonders bevorzugt 0 phr. Die Menge an RF-Systemen in dem gesamten mehrschichtigen flexiblen Schlauch beträgt besonders bevorzugt 0 phr.

Der erfindungsgemäße mehrschichtige flexible Schlauch umfasst vorzugsweise die in der Kunststoff- bzw. Elastomerindustrie üblicherweise verwendeten Additive. Diese umfassen beispielsweise Additive, ausgewählt aus der Gruppe, bestehend aus Siliziumdioxid (Silica/Kieselsäure), Kaolin, Titandioxid, Fettsäuren, Weichmacher, Gleitmittel, Geruchsabsorber, antimikrobiellen Substanzen, organischen und anorganischen Farbpigmenten, Haftvermittler, Verarbeitungshilfsmittel, Flammschutzmittel, Alterungsschutzmittel, Metalloxiden und Metallhydroxiden, Verzögerern, Aktivatoren, Faktis, Graphit, Carbon Nanotubes, Kohlefasern und/oder Ruß.

Diese können jeweils in einer Menge von 0,1 bis 200 phr in jeder der Schichten des mehrschichtigen flexiblen Schlauches vorhanden sein.

Hinsichtlich des erfindungsgemäßen Herstellungsverfahrens wird der erfindungsgemäße mehrschichtige flexible Schlauch entsprechend dem in Anspruch 9 definierten Verfahren hergestellt.

Besonders bevorzugt wird der erfindungsgemäße mehrschichtige flexible Schlauch nach einem Verfahren hergestellt, bei dem die Innenschicht und die Außenschicht durch Extrudieren hergestellt werden, um einen Schlauchrohling zu erhalten, der anschließend mit der einlagigen oder mehrlagigen Festigkeitsträgerschicht konfektioniert und einer abschließenden Vulkanisation unterzogen wird.

Während der Vulkanisation, vorzugsweise in Gegenwart eines Vernetzungsmittels, wie z.B. einem Peroxid, reagieren dabei die Vinylgruppe des Silans mit dem Elastomer der Innenschicht, Zwischenschicht bzw. der Außenschicht, was zu einer stabileren Bindung zwischen dem Festigkeitsträger und der Innenschicht, Zwischenschicht bzw. der Außenschicht führt.

Der erfindungsgemäße mehrschichtige flexible Schlauch unterliegt bezüglich seiner Verwendung keinen Einschränkungen, kann insbesondere ein Kupplungsschlauch, Kühlwasserschlauch, Chemieschlauch, beheizbarer Schlauch, Trinkwasserschlauch, Lebensmittelschlauch, Krümmerschlauch, Offshore- und Marine-Schlauch, Bunkerschlauch, Klimaschlauch oder Farbspritzschlauch sein.

Der erfindungsgemäße Verwendung ist die als Bremsschlauch, insbesondere in einem Kraftfahrzeug.

Die vorliegende Erfindung betrifft demnach auch die Verwendung eines mehrschichtigen flexiblen Schlauchs, wie vorstehend beschrieben, als Bremsschlauch, insbesondere in einem Kraftfahrzeug.

Die oben im Einzelnen dargestellte Erfindung lässt sich vor folgendem technologischem Hintergrund, teilweise bereits vorstehend angesprochen, darstellen: Die Sinalolgruppen reagieren mit den Hydroxylgruppen des PVAL (und untereinander) in einer Kondensationsreaktion unter Wasserabspaltung, so dass die Oberfläche des Festigkeitsträgers mit Vinylgruppen funktionalisiert wird. Während der Vulkanisation reagiert die Vinylgruppe in Anwesenheit von Peroxid mit EPDM. Beide Reaktionen führen zu einer stabilen Bindung zwischen dem Festigkeitsträger und der einlagigen oder mehrlagigen Innenschicht, wie oben bezeichnet.

Die produktrelevanten Eigenschaften des erfindungsgemäßen Erzeugnisses sollen wie folgt dargestellt werden: Der Schlauch ist gegenüber der Serie weicher. Er kann daher in Einbausituationen mit engen Biegeradien leichter montiert werden. Die besseren dynamischen Eigenschaften verlängern die Lebensdauer. Die Lagenhaftung ist größer als bei RF-Haftsystemen, der Schlauch wird dadurch robuster. Eine Garnfärbung ist leicht möglich, da Silane im Gegensatz zu RF-Harzen nahezu transparent sind. Die Herstellung kann durch die Verwendung von hydrolysierten Organosilanen VOC-frei ausgeführt werden.

Die Erfindung wird anschließend durch ein beschränkendes Beispiel näher erläutert.

### Beispiel 1:

Es wurde ein mehrschichtiger flexibler Schlauch mit folgendem Aufbau hergestellt:
- Innenschicht:: EPDM-Mischung peroxidisch vernetzt
- Festigkeitsträgerschicht:: PVAL, silanisiert
- Zwischenschicht:: EPDM-Lösungsmischung, RF-frei
- Festigkeitsträgerschicht:: PVAL, silanisiert
- Außenschicht:: EPDM-Mischung peroxidisch vernetzt

Die Innen-, Zwischen- und Außenschicht haben gleiche Zusammensetzung.

Ein solcher Schlauch zeichnet sich insbesondere durch um ca. 20 - 35% erhöhte Lagenhaftungen zwischen der Innenschicht/1.Geflecht, 1. Geflecht/2. Geflecht und Außenschicht/Geflecht im Vergleich zu RF-Systemen aus. Ferner ist die Biegesteifigkeit um ca. 35% reduziert, womit der Schlauch weicher ist.

Die dynamischen Eigenschaften des Schlauches sind hinsichtlich der Flexibilität vorteilhaft. Die Flexibilität kann als sehr gut bezeichnet werden.

Ferner ist der Schlauch RF-frei, so dass der Schlauch hinsichtlich Umwelt- und Gesundheitsaspekten vorteilhaft ist.

**Tabelle 1: Innen-, Zwischen- und Außengummi: EPDM, peroxidisch, 70 Shore A**

| Schicht | Beschreibung | Ausführung A | Ausführung B | Ausführung C |
|---|---|---|---|---|
| 1 | Innengummi | vorhanden | vorhanden | vorhanden |
| 2 | PVAL Festigkeitsträger | RFL | RFL | Oligomeres Organosilanol (Vinyl/Amino) |
| 3 | Zwischengummi | vorhanden | vorhanden | vorhanden |
| 4 | PVAL Festigkeitsträger | RFL | RFL | Oligomeres Organosilanol (Vinyl/Amino) |
| 5 | Zwischengummi | vorhanden | entfällt | entfällt |
| 6 | Außengummi | vorhanden | vorhanden | vorhanden |

Tabelle 2:

**Tabelle 2: Biegesteifigkeit und Trennwiderstand, Referenz ist die Ausführung A.**

| Ausführung | Biegesteifigkeit [%] | Trennwi derstand zwischen den Schichten [%] | | |
|---|---|---|---|---|
| | | 1 und 2 | 2 und 4 | 5 und 6 |
| A | 100 | 100 | 100 | 100 |
| B | 92 | 91 | 94 | 94 |
| C | 63 | 133 | 135 | 122 |

## Patentansprüche

1. Mehrschichtiger flexibler Schlauch, der folgende Schichten enthält:
- eine einlagige oder mehrlagige Außenschicht auf Basis wenigstens eines Elastomers und
- wenigstens eine einlagige oder mehrlagige Festigkeitsträgerschicht, umfassend mindestens einen textilen Festigkeitsträger, und
- eine einlagige oder mehrlagige Innenschicht auf Basis wenigstens eines Elastomers,
wobei die Oberfläche des mindestens einen Festigkeitsträgers mit mindestens einem organofunktionellen Silan funktionalisiert ist, **dadurch gekennzeichnet, dass** das organofunktionelle Silan auf der Oberfläche des Festigkeitsträgers mindestens ein hydrolysiertes vinyl- und aminofunktionalisiertes Oligosilan umfasst.

2. Mehrschichtiger flexibler Schlauch gemäß Anspruch 1, **dadurch gekennzeichnet, dass** das Elastomer der Außenschicht wenigstens einen EPM- und/oder EPDM-Kautschuk umfasst.

3. Mehrschichtiger flexibler Schlauch gemäß irgendeinem der vorhergehenden Ansprüche, **dadurch gekennzeichnet, dass** das Elastomer der Innenschicht wenigstens einen EPM- und/oder EPDM-Kautschuk umfasst.

4. Mehrschichtiger flexibler Schlauch gemäß irgendeinem der vorhergehenden Ansprüche, **dadurch gekennzeichnet, dass** das Elastomer der Innenschicht wenigstens einen vernetzten, insbesondere einen peroxidisch vernetzen EPM- und/oder EPDM-Kautschuk, umfasst.

5. Mehrschichtiger flexibler Schlauch gemäß irgendeinem der vorhergehenden Ansprüche, **dadurch gekennzeichnet, dass** das Elastomer der Außenschicht wenigstens einen vernetzten, insbesondere einen peroxidisch vernetzen EPM- und/oder EPDM-Kautschuk, umfasst.

6. Mehrschichtiger flexibler Schlauch gemäß irgendeinem der vorhergehenden Ansprüche, **dadurch gekennzeichnet, dass** der mindestens eine Festigkeitsträger der einlagigen oder mehrlagigen Festigkeitsträgerschicht Rayon, PVAL, Aramid, Polyamid und/oder eine Hybridvariante der genannten Materialien umfasst.

7. Mehrschichtiger flexibler Schlauch gemäß irgendeinem der vorhergehenden Ansprüche, **dadurch gekennzeichnet, dass** die mehrlagige Festigkeitsträgerschicht textil ist und aus zwei Festigkeitsträgern besteht, die jeweils Rayon, PVAL, Aramid, Polyamid und/oder eine Hybridvariante der genannten Materialien umfasst und/oder eine dazwischenliegende EPDM auf Basis wenigstens eines EPM- oder EPDM-Kautschuks aufweist.

8. Mehrschichtiger flexibler Schlauch gemäß irgendeinem der vorhergehenden Ansprüche, **dadurch gekennzeichnet, dass** die einlagige oder mehrlagige textile Festigkeitsträgerschicht, insbesondere der mindestens eine textile Festigkeitsträger frei von Resorcin-Formaldehyd ist.

9. Verfahren zur Herstellung eines mehrschichtigen flexiblen Schlauchs gemäß irgendeinem der Ansprüche 1 bis 8, **dadurch gekennzeichnet, dass** die Innenschicht und die Außenschicht durch Extrudieren, Kalandrieren und/oder Spritzgießen hergestellt werden, um einen Schlauchrohling zu erhalten, der anschließend mit der einlagigen oder mehrlagigen Festigkeitsträgerschicht konfektioniert und einer abschließenden Vulkanisation unterzogen wird.

10. Verwendung eines flexiblen Schlauches nach mindestens einem der Ansprüche 1 bis 8 als Bremsschlauch, insbesondere in einem Kraftfahrzeug.

## Claims

1. Multilayered flexible hose containing the following layers:
- a single-ply or multi-ply outer layer based on at least one elastomer and
- at least one single-ply or multi-ply strength member layer comprising at least one textile strength member and
- a single-ply or multi-ply inner layer based on at least one elastomer,
wherein the surface of the at least one strength member is functionalized with at least one organofunctional silane, **characterized in that** the organofunctional silane on the surface of the strength member comprises at least one hydrolyzed vinyl- and amino-functionalized oligosilane.

2. Multilayered flexible hose according to Claim 1, **characterized in that** the elastomer of the outer layer comprises at least one EPM and/or EPDM rubber.

3. Multilayered flexible hose according to either of the preceding claims, **characterized in that** the elastomer of the inner layer comprises at least one EPM and/or EPDM rubber.

4. Multilayered flexible hose according to any of the preceding claims, **characterized in that** the elastomer of the inner layer comprises at least one crosslinked, in particular peroxidically crosslinked, EPM and/or EPDM rubber.

5. Multilayered flexible hose according to any of the preceding claims, **characterized in that** the elastomer of the outer layer comprises at least one crosslinked, in particular peroxidically crosslinked, EPM and/or EPDM rubber.

6. Multilayered flexible hose according to any of the preceding claims, **characterized in that** the at least one strength member of the single-ply or multi-ply strength member layer comprises rayon, PVAL, aramid, polyamide and/or a hybrid variant of the recited materials.

7. Multilayered flexible hose according to any of the preceding claims, **characterized in that** the multi-ply strength member layer is textile and consists of two strength members, each comprising rayon, PVAL, aramid, polyamide and/or a hybrid variant of the recited materials, and/or comprises an interposed EPDM based on at least one EPM or EPDM rubber.

8. Multilayered flexible hose according to any of the preceding claims, **characterized in that** the single-ply or multi-ply textile strength member layer, in particular the at least one textile strength member, is free from resorcinol-formaldehyde.

9. Process for producing a multilayered flexible hose according to any of Claims 1 to 8, **characterized in that** the inner layer and the outer layer are produced by extruding, calendaring and/or injection molding to obtain an unvulcanized hose which is subsequently assembled with the single-ply or multi-ply strength member layer and subjected to a concluding vulcanization.

10. Use of a flexible hose according to at least one of Claims 1 to 8 as a brake hose, in particular in a motor vehicle.

## Revendications

1. Tuyau flexible multicouche, qui contient les couches suivantes :
- une couche externe monocouche ou multicouche sur la base d'au moins un élastomère et
- au moins une couche support monocouche ou multicouche de renforcement, comprenant au moins un support textile de renforcement et
- une couche interne monocouche ou multicouche sur la base d'au moins un élastomère,
la surface dudit au moins un support de renforcement étant fonctionnalisée par au moins un silane organofonctionnel, **caractérisé en ce que** le silane
organofonctionnel comprend, sur la surface du support de renforcement, au moins un oligosilane hydrolysé à fonctionnalité vinyle et amino.

2. Tuyau flexible multicouche selon la revendication 1, **caractérisé en ce que** l'élastomère de la couche externe comprend au moins un caoutchouc d'EPM et/ou d'EPDM.

3. Tuyau flexible multicouche selon l'une quelconque des revendications précédentes, **caractérisé en ce que** l'élastomère de la couche interne comprend au moins un caoutchouc d'EPM et/ou d'EPDM.

4. Tuyau flexible multicouche selon l'une quelconque des revendications précédentes, **caractérisé en ce que** l'élastomère de la couche interne comprend au moins un caoutchouc d'EPM et/ou d'EPDM réticulé, en particulier réticulé par un peroxyde.

5. Tuyau flexible multicouche selon l'une quelconque des revendications précédentes, **caractérisé en ce que** l'élastomère de la couche externe comprend au moins un caoutchouc d'EPM et/ou d'EPDM réticulé, en particulier réticulé par un peroxyde.

6. Tuyau flexible multicouche selon l'une quelconque des revendications précédentes, **caractérisé en ce que** ledit au moins un support de renforcement de la couche support monocouche ou multicouche de renforcement comprend de la rayonne, du PVAL, de l'aramide, du polyamide et/ou une variante hybride des matériaux mentionnés.

7. Tuyau flexible multicouche selon l'une quelconque des revendications précédentes, **caractérisé en ce que** la couche support multicouche de renforcement est un textile et est constituée par deux supports de renforcement comprenant à chaque fois de la rayonne, du PVAL, de l'aramide, du polyamide et/ou une variante hybride des matériaux mentionnés, et/ou présente un EPDM intermédiaire sur la base d'au moins un caoutchouc d'EPM ou d'EPDM.

8. Tuyau flexible multicouche selon l'une quelconque des revendications précédentes, **caractérisé en ce que** la couche support monocouche ou multicouche textile de renforcement, en particulier ledit au moins un support de renforcement textile, est exempt de résorcinol-formaldéhyde.

9. Procédé de fabrication d'un tuyau flexible multicouche selon l'une quelconque des revendications 1 à 8, **caractérisé en ce que** la couche interne et la couche externe sont fabriquées par extrusion, calandrage et/ou moulage par injection, afin d'obtenir une ébauche de tuyau, qui est ensuite confectionnée avec la couche support monocouche ou multicouche de renforcement et soumise à une vulcanisation finale.

10. Utilisation d'un tuyau flexible selon au moins l'une des revendications 1 à 8 comme flexible de frein, en particulier dans un véhicule automobile.
